# EUROPEAN PATENT SPECIFICATION

(11) **EP 3 506 258 B1**
(45) Date of publication and mention of the grant of the patent: **25.10.2023**
(21) Application number: 18197917.0
(22) Date of filing: 01.10.2018
(51) Int. Cl.: G10L 15/22, G06F 3/16, H04N 23/60

(54) **INFORMATION CAPTURING DEVICE AND VOICE CONTROL METHOD**
INFORMATIONSERFASSUNGSVORRICHTUNG UND SPRACHSTEUERUNGSVERFAHREN
DISPOSITIF DE CAPTURE D'INFORMATIONS ET PROCÉDÉ DE COMMANDE VOCALE

(30) Priority: 02.01.2018 US 201862612998 P
(43) Date of publication of application: 03.07.2019
(73) Proprietor: Getac Holdings Corporation, Taipei City 11568 (TW)
(72) Inventor: CHEN, Min-Tai, 11568 Taipei City (TW)
(74) Representative: Viering, Jentschura & Partner mbB Patent- und Rechtsanwälte

(56) References cited:
- US-A1- 2015 269 835
- US-A1- 2017 019 580
- US-A1- 2017 222 676
- US-A1- 2017 237 950

## Description

### BACKGROUND OF THE INVENTION

### FIELD OF THE INVENTION

The present disclosure relates to technology of controlling information capturing devices and, more particularly, to an information capturing device and voice control technology related thereto.

### DESCRIPTION OF THE PRIOR ART

Police officers on duty have to record sounds and shoot videos in order to collect evidence and preserve the evidence. Hence, police officers on duty wear information capturing devices for capturing medium-related data, including images and sounds, from the surroundings, so as to facilitate policing. The medium-related data recorded by the information capturing devices is descriptive of real-time on-site conditions of an ongoing event with a view to fulfilling burdens of proof and clarifying liabilities later.

Users operate start switches of conventional portable information capturing devices in order to enable the portable information capturing devices to capture data related to the surroundings. However, in an emergency, a typical scenario is as follows: it is too late for the users to start capturing data by hand; or images and/or sounds related to a crucial situation have already vanished by the time the users start capturing data by hand. Conventional systems are disclosed in US2015/269835 A1 or US 2017/019580.

### SUMMARY OF THE INVENTION

It is an object of the invention to overcome the shortcomings in the prior art. This object of the invention is solved by the independent claims.

### BRIEF DESCRIPTION OF THE DRAWINGS

FIG. 1 is a block diagram of circuitry of an information capturing device according to an embodiment of the present disclosure;
FIG. 2 is a flowchart of a voice control method for the information capturing device according to an embodiment of the present disclosure;
FIG. 3 is a block diagram of circuitry of the information capturing device according to another embodiment of the present disclosure;
FIG. 4 is a flowchart of the voice control method for the information capturing device according to another embodiment of the present disclosure;
FIG. 5 is a flowchart of the voice control method for the information capturing device according to another embodiment of the present disclosure; and
FIG. 6 is a flowchart of the voice control method for the information capturing device according to yet another embodiment of the present disclosure.

### DETAILED DESCRIPTION OF THE EMBODIMENTS

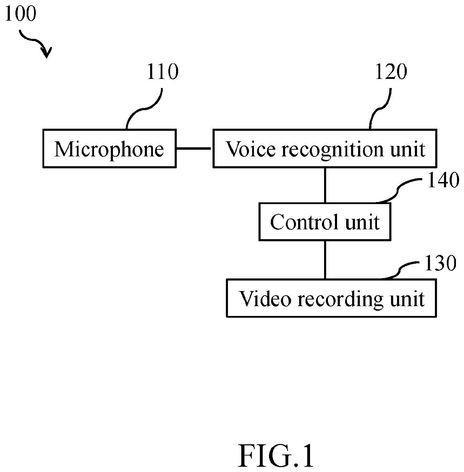

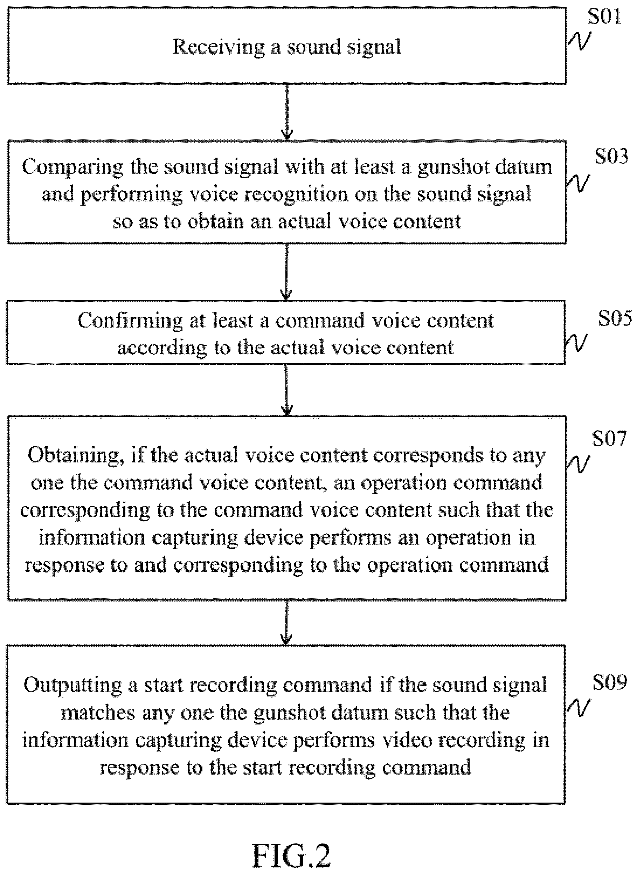

FIG. 1 is a block diagram of circuitry of an information capturing device according to an embodiment of the present disclosure. FIG. 2 is a flowchart of a voice control method for the information capturing device according to an embodiment of the present disclosure. Referring to FIG. 1 and FIG. 2, an information capturing device 100 includes a microphone 110, a voice recognition unit 120, a video recording unit 130 and a control unit 140. The microphone 110 is coupled to the voice recognition unit 120. The voice recognition unit 120 and the video recording unit 130 are coupled to the control unit 140.

The microphone 110 receives an ambient sound. The microphone 110 has a signal processing circuit (not shown). The signal processing circuit turns the ambient sound (sound wave defined in physics) into a sound signal (digital signal) (step S01). The step of receiving an ambient sound involves sensing sounds of the surroundings, and the ambient sound is, for example, a sound generated from a human being, animal or object in the surroundings (such as a horn sound made by a passing vehicle or a shout made by a pedestrian) or a gunshot.

After receiving a sound signal from the microphone 110, the voice recognition unit 120 compares the sound signal with at least a gunshot datum to confirm whether the sound signal matches any one gunshot datum. The voice recognition unit 120 performs voice recognition on the sound signal so as to obtain an actual voice content (step S03).

In an embodiment of step S03, the voice recognition unit 120 analyzes and compares the sound signal with gunshot data of a sound model database, so as to confirm whether the sound signal matches any one gunshot datum. Therefore, the voice recognition unit 120 analyzes the sound signal to therefore capture at least a feature of the sound signal, and then the voice recognition unit 120 compares the at least a feature of the sound signal with signal features of at least one or a plurality of gunshot data of the sound model database, so as to confirm whether the sound signal matches any one gunshot datum.

In an embodiment of step S03, the voice recognition unit 120 analyzes and compares a sound signal with sound signals of the sound model database, so as to confirm whether the sound signal matches any one gunshot datum. Therefore, the voice recognition unit 120 analyzes the sound signal to therefore capture at least a feature of the sound signal, and then the voice recognition unit 120 discerns or compares the at least a feature of the sound signal and voice data of the sound model database to therefore select or determine a text content of the sound signal, so as to obtain an actual voice content which matches the at least a feature of the sound signal.

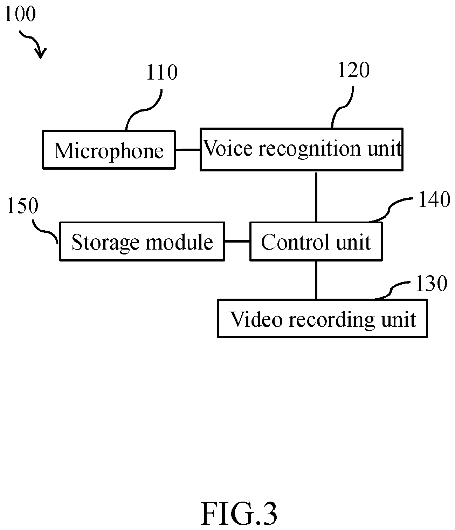

In an exemplary embodiment, the information capturing device 100 further includes a sound model database. The sound model database includes at least one or a plurality of gunshot data and at least one or a plurality of voice data. The gunshot data are signals pertaining to sounds generated as a result of the firings of various types of handguns. Each voice datum is in the form of a glossary, that is, word strings composed of one-word terms, multiple-word terms, and sentences, as well as their pronunciations. In an embodiment, the sound model database is stored in a storage module 150 of the information capturing device 100. Therefore, the information capturing device 100 further includes a storage module 150 (as shown in FIG. 3). The storage module 150 is coupled to the control unit 140.

The control unit 140 receives the actual voice content from the voice recognition unit 120 and confirms at least a command voice content according to the actual voice content (step S05). In an exemplary embodiment, relationship between the actual voice content and the at least a command voice content is recorded in a lookup table (not shown) such that the control unit 140 searches the lookup table for at least one or a plurality of command voice contents and confirms the command voice content(s) corresponding to the actual voice content. In an embodiment aspect, the lookup table is stored in the sound module 150 of the information capturing device 100. The sound module 150 is coupled to the control unit 140. In an exemplary embodiment, an actual voice content corresponding to any one command voice content is identical to the command voice content in whole. For instance, the actual voice content is a "start recording command," whereas the command voice content is "start recording." In another exemplary embodiment, an actual voice content corresponding to any one command voice content is identical to the command voice content in part above a specific ratio. For instance, the actual voice content is "start," whereas the command voice content is "start recording." In another exemplary embodiment, an actual voice content corresponding to any one command voice content includes a content identical to the command voice content and another content (such as an ambient sound content) different from the command voice content. For instance, an actual voice content is "start recording," and an ambient sound content which differs from the command voice content, whereas the command voice content is "start recording."

If the actual voice content corresponds to any one command voice content, that is, the actual voice content corresponds to the command voice content in whole or corresponds to the command voice content and the other non-command voice contents (such as an ambient sound content), the control unit 140 obtains an operation command corresponding to the command voice content according to the command voice content corresponding to the actual voice content, and in consequence the information capturing device 100 performs an operation in response to and corresponding to the operation command (step S07). In an exemplary embodiment of step S07, after finding a corresponding command voice content in the lookup table, the control unit 140 fetches from the lookup table the operation command corresponding to the command voice content found.

If the sound signal matches any one gunshot datum, that is, in step S03, if the voice recognition unit 120 compares the feature of a sound signal with the signal features of at least one or a plurality of gunshot data of the sound model database and then confirms that the sound signal matches any one gunshot datum, the voice recognition unit 120 sends to the control unit 140 the comparison result that the sound signal matches any one gunshot datum, and in consequence the control unit 140 outputs a start recording command, causing the information capturing device 100 to perform video recording in response to the start recording command (step S09). In step S09, the control unit 140 controls, in response to the start recording command, the video recording unit 130 to perform video recording so as to capture an ambient datum, that is, recording images and/or sounds of the surroundings (such as a horn sound made by a passing vehicle or a shout made by a pedestrian), or images and/or sounds of a gunshot. In some embodiments, if the sound signal does not match any one gunshot datum, that is, in the absence of any gunshot, the control unit 140 instructs the information capturing device 100 to perform an operation in response to and corresponding to the operation command (step S07) but not to respond to the start recording command (i.e., not to execute step S09).

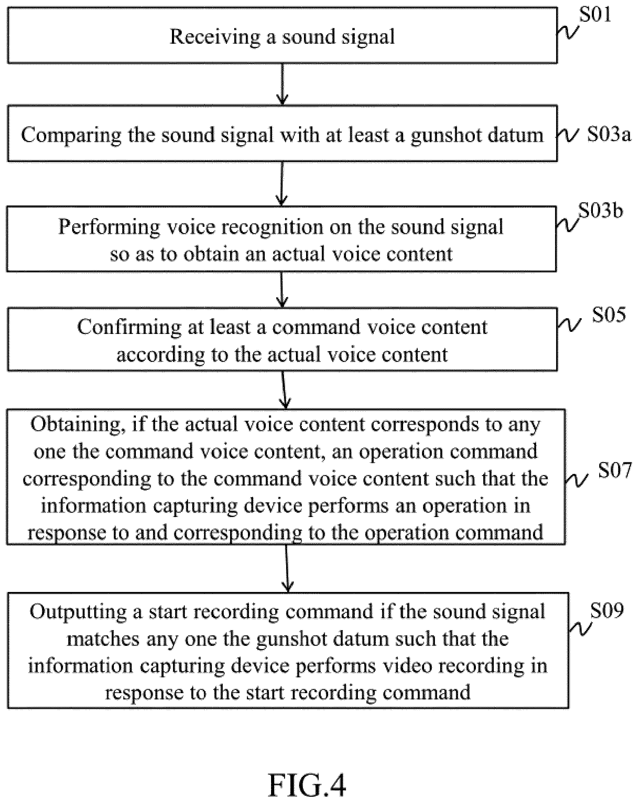

In some embodiments, in an embodiment of step S03, as shown in FIG. 2, the voice recognition unit 120 simultaneously compares a sound signal with at least a gunshot datum and performs voice recognition on the sound signal so as to obtain an actual voice content. In some other embodiments, as shown in FIG. 4, the voice recognition unit 120 compares a sound signal with at least a gunshot datum (step S03a) and then performs voice recognition on the sound signal so as to obtain an actual voice content (step S03b).

Although the aforesaid steps are described sequentially, the sequence is not restrictive of the present disclosure. Persons skilled in the art understand that under reasonable conditions some of the steps may be performed simultaneously or in reverse order.

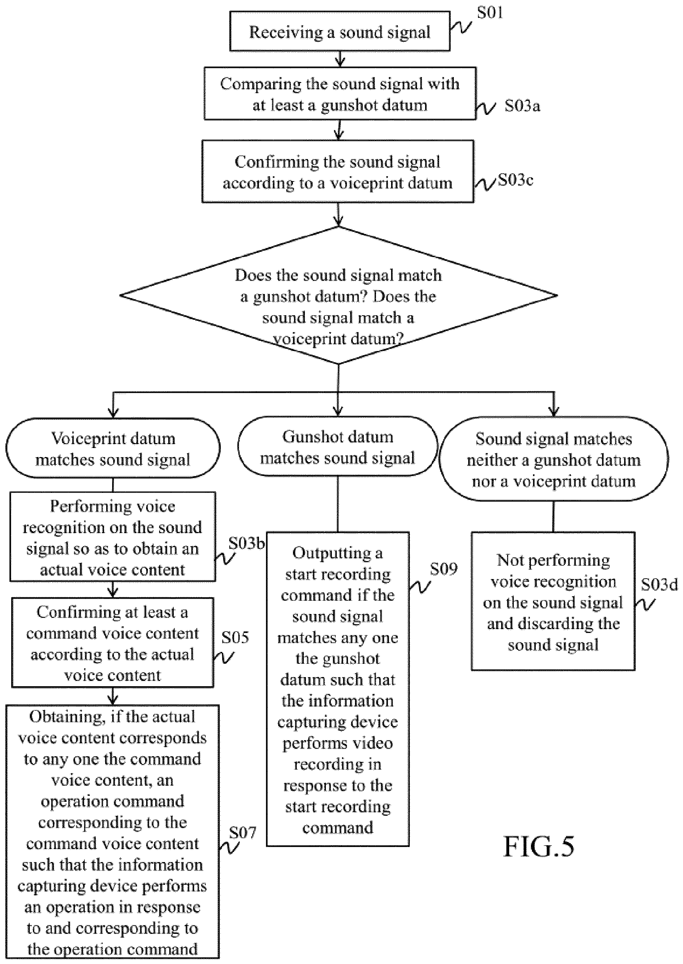

FIG. 5 is a flowchart of the voice control method for the information capturing device according to another embodiment of the present disclosure. As shown in FIG. 5, before executing step S03b, the control unit 140 confirms the sound signal according to a voiceprint datum (step S03c). As shown in the diagram, step S05, step S07, and step S09 are substantially identical to their aforesaid counterparts.

In step S03c, the voice recognition unit 120 analyzes the sound signal and thus creates an input sound spectrum such that the voice recognition unit 120 discerns or compares features of the input sound spectrum and features of a predetermined sound spectrum of a voiceprint datum to therefore perform identity authentication on a user, thereby identifying whether the sound is attributed to the user's voice. In an embodiment aspect, the user records each operation command beforehand with the microphone 110 in order to configure a predetermined sound spectrum correlated to the user and corresponding to each operation command. The voiceprint datum is the predetermined sound spectrum corresponding to each operation command. In an embodiment aspect, the voiceprint datum is a predetermined sound spectrum which corresponds to each operation command and is recorded beforehand by one or more users. In an embodiment aspect, the voiceprint datum is stored in the sound module 150 of the information capturing device 100 (as shown in FIG. 3).

The control unit 140 performs voice recognition on the sound signal so as to obtain an actual voice content, only if the sound signal matches the voiceprint datum, that is, only if the feature of the input sound spectrum matches the feature of the predetermined sound spectrum of the voiceprint datum (step S03b). Afterward, the information capturing device 100 executes step S05 through step S07.

If the sound signal matches the gunshot datum, the voice recognition unit 120 sends to the control unit 140 the comparison result that the sound signal matches any one gunshot datum such that the control unit 140 outputs a start recording command to cause the information capturing device 100 to perform video recording in response to the start recording command (step S09).

If the sound signal matches neither the voiceprint datum nor any one gunshot datum, that is, if the feature of the input sound spectrum does not match the feature of the predetermined sound spectrum of the voiceprint datum and no gunshot occurs, the control unit 140 does not perform voice recognition on the sound signal but discards the sound signal (step S03d).

If the sound signal not only matches the voiceprint datum but also matches any one gunshot datum, the control unit 140 proceeds to execute step S03b, step S05, step S07 through step S09.

In some embodiments, the operation command is "start recording command," "finish recording command" or "sorting command." In some other embodiments, the operation command is "command of feeding back the number of hours video-recordable," "command of saving files and playing a prompt sound by a sound file," "command of feeding back remaining capacity" or "command of feeding back resolution." The aforesaid examples of the operation command are illustrative, rather than restrictive, of the present disclosure; hence, persons skilled in the art understand that under reasonable conditions the operation command may be programmed and thus created or altered.

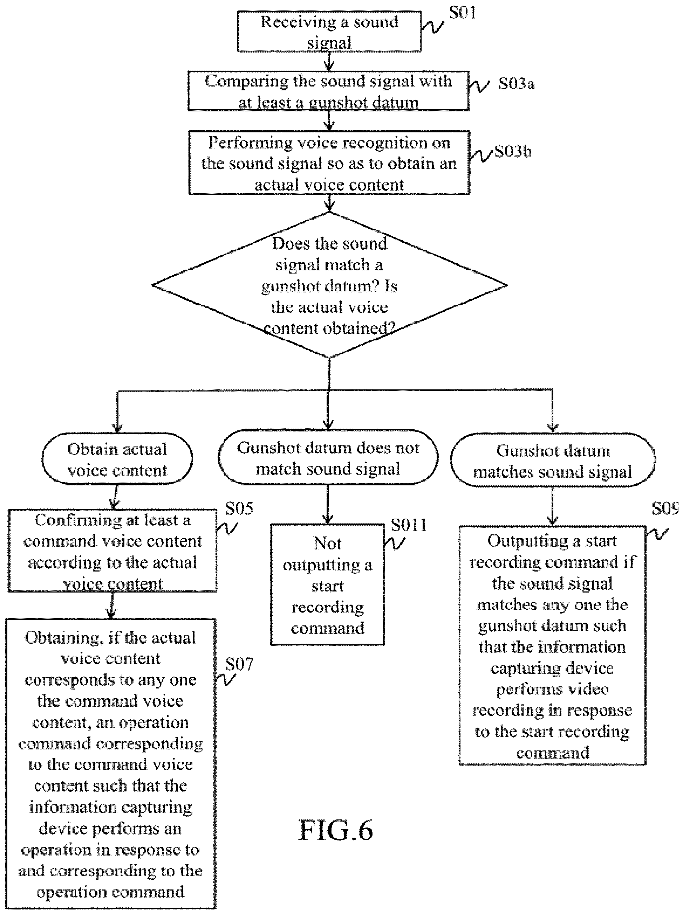

FIG. 6 is a flowchart of the voice control method for the information capturing device according to yet another embodiment of the present disclosure. In an exemplary embodiment, as shown in FIG. 1 and FIG. 6, if the user says "start camera recording" to the microphone 110 and the ambient sound does not include a gunshot, the microphone 110 will receive a sound signal (step S01) and send the sound signal to the voice recognition unit 120. The voice recognition unit 120 compares the feature of a sound signal with signal features of at least one or a plurality of gunshot data of the sound model database, so as to confirm whether the sound signal matches any one gunshot datum (step S03a). The voice recognition unit 120 performs voice recognition on the sound signal so as to obtain an actual voice content of "start camera recording" (step S03b). The control unit 140 sequentially confirms the command voice contents recorded in the lookup table according to the actual voice contents of "start camera recording" obtained according to results of voice recognition (step S05), so as to identify the command voice content corresponding to the actual voice content. After identifying the command voice content, the control unit 140 fetches from the lookup table the operation command of "start recording command" corresponding to the command voice content, and then the control unit 140 controls, in response to the start recording command (*i.e.,* in response to the operation command), the video recording unit 130 to perform video recording so as to capture the ambient datum (*i.e.,* perform an operation corresponding to the operation command) (step S07). Although in step S03a the control unit 140 compares the feature of a sound signal with the signal features of at least one or a plurality of gunshot data of the sound model database and then confirms that the sound signal does not match any one gunshot datum, the control unit 140 still controls, in response to the start recording command (*i.e.,* in response to the operation command), the video recording unit 130 to perform video recording so as to capture the ambient datum (*i.e*., perform an operation corresponding to the operation command) (step S07). According to the invention, if a gunshot occurs and the user says "start camera recording" to the microphone 110, it means that the control unit 140 receives the start recording command corresponding to the actual voice content and the start recording command corresponding to the gunshot. As a result, the control unit 140 responds to the first-received start recording command and then discards the later-received start recording command (*i.e.*, no longer executes the later-received start recording command.)

In an exemplary embodiment illustrated by FIG. 1 and FIG. 6, if the microphone 110 receives an ambient sound which includes a gunshot but not any voice of the user, the microphone 110 receives a sound signal (step S01) and sends the sound signal to the voice recognition unit 120. The voice recognition unit 120 compares the feature of a sound signal with the signal features of at least one or a plurality of gunshot data of the sound model database (step S03a), so as to confirm whether the sound signal matches any one gunshot datum. The voice recognition unit 120 performs voice recognition on the sound signal (step S03b). In step S03a, if the control unit 140 compares the feature of a sound signal with the signal features of at least one or a plurality of gunshot data of the sound model database and confirms that the sound signal matches any one gunshot datum, the control unit 140 outputs a start recording command such that the control unit 140 of the information capturing device 100 controls, in response to the start recording command, the video recording unit 130 to perform video recording so as to capture an ambient datum (step S09).

If the microphone 110 receives an ambient sound once again and the ambient sound includes "end camera recording" said by the user but not a gunshot, the microphone 110 receives a sound signal (step S01) and sends the sound signal to the voice recognition unit 120. The voice recognition unit 120 compares the feature of a sound signal with the signal features of at least one or a plurality of gunshot data of the sound model database (step S03a), so as to confirm whether the sound signal matches any one gunshot datum. The voice recognition unit 120 performs voice recognition on the sound signal (step S03b) so as to obtain an actual voice content of "end camera recording." The control unit 140 sequentially confirms the command voice contents recorded in the lookup table according to the actual voice contents of "end camera recording" obtained according to results of voice recognition (step S05), so as to identify the command voice content corresponding to the actual voice content. After identifying the command voice content, the control unit 140 fetches from the lookup table the operation command of "finish recording command" corresponding to the command voice content, the control unit 140 controls, in response to the finish recording command (*i.e.*, in response to the operation command), the video recording unit 130 to finish video recording so as to create an ambient datum (i.e., perform an operation corresponding to the operation command) (step S07).

In an exemplary embodiment illustrated by FIG. 1 and FIG. 6, if the microphone 110 receives an ambient sound which includes a gunshot and "event 1" said by the user, the microphone 110 receives a sound signal (step S01) and sends the sound signal to the voice recognition unit 120. The voice recognition unit 120 compares the feature of a sound signal with the signal features of at least one or a plurality of gunshot data of the sound model database, so as to confirm whether the sound signal matches any one gunshot datum (step S03a). The voice recognition unit 120 performs voice recognition on the sound signal, so as to obtain an actual voice content of "event 1" (step S03b). The control unit 140 sequentially confirms the command voice contents recorded in the lookup table according to an actual voice content of "event 1" obtained according to results of voice recognition (step S05), so as to identify the command voice content corresponding to the actual voice content. After identifying the command voice content, the control unit 140 fetches from the lookup table the operation command of "sorting command" corresponding to the command voice content, and then the control unit 140 names the video file "event 1" in response to the operation command of "sorting command" (*i.e.*, in response to the operation command) (step S07). If the sound signal matches any one gunshot datum, the control unit 140 outputs a start recording command such that the control unit 140 of the information capturing device 100 controls, in response to the start recording command, the video recording unit 130 to perform video recording so as to capture an ambient datum (step S09). In yet another exemplary embodiment, the control unit 140 responds to the operation command of "sorting command" before or after the step of starting video recording gunshot or the step of starting video recording voice (the user says "start camera recording" to the microphone 110.)

In some embodiments, the video recording unit 130 is implemented as an image pickup lens and an image processing unit. In an exemplary embodiment, the image processing unit is an image signal processor (ISP). In another exemplary embodiment, the image processing unit and the control module 130 is implemented by the same chip, but the present disclosure is not limited thereto.

In some embodiments, the control unit 140 is implemented as one or more processing components. The processing components are each a microprocessor, microcontroller, digital signal processor, central processing unit (CPU), programmable logic controller, state machine, or any analog and/or digital device based on the operation command and the operation signal, but the present disclosure is not limited thereto.

In some embodiments, the sound module 150 is implemented as one or more sound components. The sound components are each, for example, a memory or a register, but the present disclosure is not limited thereto.

In some embodiments, the information capturing device 100 is a portable image pickup device, such as a wearable camera, a portable evidence-collecting camcorder, a mini camera, or a hidden voice recorder mounted on a hat or clothes. In some embodiments, the information capturing device 100 is a stationary image pickup device, such as a dashboard camera mounted on a vehicle.

In conclusion, an information capturing device and a voice control method for the same in embodiments of the present disclosure entails starting video recording in response to a gunshot and performing voice recognition on a sound signal to therefore obtain an actual voice content, so as to obtain a corresponding operation command, thereby performing an operation in response to and corresponding to the operation command.

Although the present disclosure is disclosed above by preferred embodiments, the preferred embodiments are not restrictive of the present disclosure. Slight changes and modifications made by persons skilled in the art to the preferred embodiments without departing from the present disclosure must be deemed falling within the scope of the present disclosure. Accordingly, the legal protection for the present disclosure should be defined by the appended claims.

## Claims

1. A voice control method for an information capturing device, comprising the steps of:
receiving, by a microphone (110), an ambient sound;
turning, by a signal processing circuit of the microphone (110), the ambient sound into a sound signal (step S01);
after receiving the sound signal from the microphone (110), comparing, by a voice recognition unit (120), the sound signal with at least a gunshot datum to confirm whether the sound signal matches a gunshot datum (step S03a);
wherein, if the sound signal matches with the gunshot datum, that is if the voice recognition unit (120) compares the feature of the sound signal with signal features of at least one or a plurality of gunshot data of a sound model database and then confirms that the sound signal matches with one gunshot datum of the sound model database, the voice recognition unit (120) sends to a control unit (140) a comparison result that the sound signal matches one gunshot datum of the sound model database, and
in consequence, outputting, by the control unit (140), a "start recording command", causing the information capturing device (100) to perform video recording in response to the "start recording command" (step S09), wherein the control unit (140) controls, in response to the "start recording command", a video recording unit (130) to perform video recording so as to capture an ambient datum;
performing, by the voice recognition unit (120), voice recognition on the sound signal so as to obtain an actual voice content (step S03b);
receiving, by the control unit (140), the actual voice content from the voice recognition unit (120) and confirming at least a command voice content according to the actual voice content (step S05); wherein a relationship between the actual voice content and the at least a command voice content is recorded in a lookup table such that the control unit (140) searches the lookup table for at least one or a plurality of command voice contents and confirms the command voice content(s) corresponding to the actual voice content;
wherein, if the actual voice content corresponds to one command voice content of the lookup table, that is, the actual voice content corresponds to the command voice content in whole or corresponds to the command voice content and non-command voice contents such as an ambient sound content, obtaining, by the control unit (140), an operation command corresponding to the command voice content according to the command voice content corresponding to the actual voice content, and in consequence the information capturing device (100), performs an operation in response to and corresponding to the operation command (step S07);
wherein the operation command is the "start recording command" or another operation command, wherein the operation command is programmable;
wherein in the case, the control unit (140) compares the feature of the sound signal with the signal features of at least one or a plurality of gunshot data of the sound model database and then confirms that the sound signal does not match any gunshot datum of the sound database (step S03a), the control unit (140) still controls, in response to the operation command, the video recording unit (130) to perform the operation corresponding to the operation command (step S07); and
wherein, if the control unit (140) receives the "start recording command" corresponding to the actual voice content and the "start recording command" corresponding to the gunshot, as a result, the control unit (140) responds to the first-received "start recording command" and then discards the later-received "start recording command".

2. An information capturing device, comprising:
a microphone (110) for receiving an ambient sound, the microphone (110) having a signal processing circuit configured to turn the ambient sound into a sound signal (step S01);
a voice recognition unit (120) coupled to the microphone (110);
a video recording unit (130) for performing video recording so as to capture an ambient datum; and
a control unit (140) coupled to the voice recognition unit (120) and the video recording unit (130);
wherein the voice recognition unit (120) is configured to: receive the sound signal from the microphone (110) and to then compare the sound signal with at least a gunshot datum to confirm whether the sound signal matches one gunshot datum,
wherein, if the sound signal matches at least one gunshot datum, that is if the voice recognition unit (120) compares the feature of the sound signal with the signal features of at least one or a plurality of gunshot data of a sound model database and then confirms that the sound signal matches one gunshot datum of the sound model database, the voice recognition unit (120) is configured to send to the control unit (140) the comparison result that the sound signal matches one gunshot datum of the sound model database, and the control unit (140) is configured to output, in consequence, a "start recording command" configured to cause the information capturing device (100) to perform video recording in response to the "start recording command" (step S09), wherein the control unit (140) is configured to control, in response to the "start recording command", the video recording unit (130) to perform video recording so as to capture the ambient datum,
wherein the voice recognition unit (120) is further configured to perform voice recognition on the sound signal so as to obtain an actual voice content (step S03b);
wherein the control unit (140) is configured to receive the actual voice content from the voice recognition unit (120) and to confirm at least a command voice content according to the actual voice content (step S05), wherein a relationship between the actual voice content and the at least one command voice content is recorded in a lookup table such that the control unit (140) is configured to search the lookup table for at least one or a plurality of command voice contents and confirms the command voice content(s) corresponding to the actual voice content;
wherein, if the actual voice content corresponds to one command voice content, that is, the actual voice content corresponds to the command voice content in whole or corresponds to the command voice content and the other non-command voice contents such as an ambient sound content, the control unit (140) is configured to obtain an operation command corresponding to the command voice content according to the command voice content corresponding to the actual voice content, and the information capturing device (100) is configured to perform, in consequence, an operation in response to and corresponding to the operation command (step S07);
wherein the operation command is the "start recording command" or another operation command, wherein the operation command is programmable;
wherein, in a case in that the control unit (140) compares the feature of the sound signal with the signal features of at least one or a plurality of gunshot data of the sound model database and then confirms that the sound signal does not match any gunshot datum, the control unit (140) is configured to still control, in response to the operation command, the video recording unit 130 to perform an operation corresponding to the operation command (step S07); and wherein, if the control unit (140) receives the start recording command corresponding to the actual voice content and the start recording command corresponding to the gunshot, the control unit (140) is configured to respond, as a result, to the first-received "start recording command" and to then discard the later-received "start recording command".

## Patentansprüche

1. Sprachsteuerverfahren für eine
Informationserfassungsvorrichtung, aufweisend die folgenden Schritte:
Empfangen eines Umgebungsgeräusches durch ein Mikrofon (110),
Umwandeln des Umgebungsgeräusches in ein Tonsignal (Schritt S01) durch eine Signalverarbeitungsschaltung des Mikrofons (110),
nach dem Empfangen des Tonsignals von dem Mikrofon (110) Vergleichen des Tonsignals mit mindestens einem Schussdatenwert durch eine Spracherkennungseinheit (120), um zu bestätigen, ob das Tonsignal mit einem Schussdatenwert übereinstimmt (Schritt S03a),
wobei, wenn das Tonsignal mit dem Schussdatenwert übereinstimmt, das heißt, wenn die Spracherkennungseinheit (120) das Merkmal des Tonsignals mit Signalmerkmalen von mindestens einem oder einer Mehrzahl von Schussdaten einer Tonmodelldatenbank vergleicht und dann bestätigt, dass das Tonsignal mit einem Schussdatenwert der Tonmodelldatenbank übereinstimmt, die Spracherkennungseinheit (120) an eine Steuereinheit (140) ein Vergleichsergebnis sendet, dass das Tonsignal mit einem Schussdatenwert der Tonmodelldatenbank übereinstimmt, und
als Folge, Ausgeben eines "Aufzeichnungsstartbefehls" durch die Steuereinheit (140), wodurch die Informationserfassungsvorrichtung (100) veranlasst wird, als Reaktion auf den "Aufzeichnungsstartbefehl" eine Videoaufzeichnung durchzuführen (Schritt S09), wobei die Steuereinheit (140) als Reaktion auf den "Aufzeichnungsstartbefehl" eine Videoaufzeichnungseinheit (130) steuert, um eine Videoaufzeichnung durchzuführen, um einen Umgebungsdatenwert zu erfassen,
Durchführen einer Spracherkennung an dem Tonsignal durch die Spracherkennungseinheit (120), um einen tatsächlichen Sprachinhalt zu erhalten (Schritt S03b),
Empfangen des tatsächlichen Sprachinhalts von der Spracherkennungseinheit (120) durch die Steuereinheit (140) und Bestätigen mindestens eines Befehlssprachinhalts gemäß dem tatsächlichen Sprachinhalt (Schritt S05), wobei eine Beziehung zwischen dem tatsächlichen Sprachinhalt und dem mindestens einen Befehlssprachinhalt in einer Nachschlagetabelle aufgezeichnet wird, so dass die Steuereinheit (140) die Nachschlagetabelle nach mindestens einem oder einer Mehrzahl von Befehlssprachinhalten durchsucht und den/die Befehlssprachinhalt(e) entsprechend dem tatsächlichen Sprachinhalt bestätigt,
wobei, wenn der tatsächliche Sprachinhalt einem Befehlssprachinhalt der Nachschlagetabelle entspricht, d.h. der tatsächliche Sprachinhalt dem Befehlssprachinhalt insgesamt entspricht oder dem Befehlssprachinhalt und Nicht-Befehlssprachinhalten, wie z.B. einem Umgebungsgeräuschinhalt, entspricht, Erhalten, durch die Steuereinheit (140), eines Betriebsbefehls, der dem Befehlssprachinhalt gemäß dem Befehlssprachinhalt entspricht, der dem tatsächlichen Sprachinhalt entspricht, und infolgedessen die Informationserfassungsvorrichtung (100) einen Vorgang als Reaktion auf den Betriebsbefehl und entsprechend diesem durchführt (Schritt S07),
wobei der Betriebsbefehl der "Aufzeichnungsstartbefehl" oder ein anderer Betriebsbefehl ist, wobei der Betriebsbefehl programmierbar ist,
wobei in dem Fall, in dem die Steuereinheit (140) das Merkmal des Tonsignals mit den Signalmerkmalen von mindestens einem oder einer Mehrzahl von Schussdaten der Tonmodelldatenbank vergleicht und dann bestätigt, dass das Tonsignal mit keinem Schussdatum der Tondatenbank übereinstimmt (Schritt S03a), die Steuereinheit (140) weiterhin als Reaktion auf den Betriebsbefehl die Videoaufzeichnungseinheit (130) steuert, um den dem Betriebsbefehl entsprechenden Vorgang durchzuführen (Schritt S07), und
wobei, wenn die Steuereinheit (140) den "Aufzeichnungsstartbefehl", der dem tatsächlichen Sprachinhalt entspricht, und den "Aufzeichnungsstartbefehl", der dem Schuss entspricht, empfängt, als Ergebnis die Steuereinheit (140) auf den zuerst empfangenen "Aufzeichnungsstartbefehl" reagiert und dann den später empfangenen "Aufzeichnungsstartbefehl" verwirft.

2. Informationserfassungsvorrichtung, aufweisend:
ein Mikrofon (110) zum Empfangen eines Umgebungsgeräusches, wobei das Mikrofon (110) eine Signalverarbeitungsschaltung aufweist, die konfiguriert ist, um das Umgebungsgeräusch in ein Tonsignal umzuwandeln (Schritt S01),
eine Spracherkennungseinheit (120), die mit dem Mikrofon (110) gekoppelt ist,
eine Videoaufzeichnungseinheit (130) zum Durchführen einer Videoaufzeichnung, um einen Umgebungsdatenwert zu erfassen, und
eine Steuereinheit (140), die mit der Spracherkennungseinheit (120) und der Videoaufzeichnungseinheit (130) gekoppelt ist,
wobei die Spracherkennungseinheit (120) konfiguriert ist, um: das Tonsignal von dem Mikrofon (110) zu empfangen und dann das Tonsignal mit mindestens einem Schussdatenwert zu vergleichen, um zu bestätigen, ob das Tonsignal mit einem Schussdatenwert übereinstimmt,
wobei, wenn das Tonsignal mit mindestens einem Schussdatenwert übereinstimmt, d.h. wenn die Spracherkennungseinheit (120) das Merkmal des Tonsignals mit den Signalmerkmalen von mindestens einem oder einer Mehrzahl von Schussdaten einer Tonmodelldatenbank vergleicht und dann bestätigt, dass das Tonsignal mit einem Schussdatenwert der Tonmodelldatenbank übereinstimmt, die Spracherkennungseinheit (120) konfiguriert ist, um das Vergleichsergebnis, dass das Tonsignal mit einem Schussdatenwert der Tonmodelldatenbank übereinstimmt, an die Steuereinheit (140) zu senden, und die Steuereinheit (140) konfiguriert ist, um infolgedessen einen "Aufzeichnungsstartbefehl" auszugeben, der konfiguriert ist, um die Informationserfassungsvorrichtung (100) zu veranlassen, als Reaktion auf den "Aufzeichnungsstartbefehl" (Schritt S09) eine Videoaufzeichnung durchzuführen, wobei die Steuereinheit (140) konfiguriert ist, um als Reaktion auf den "Aufzeichnungsstartbefehl" die Videoaufzeichnungseinheit (130) zu steuern, um eine Videoaufzeichnung durchzuführen, um den Umgebungsdatenwert zu erfassen,
wobei die Spracherkennungseinheit (120) ferner konfiguriert ist, um eine Spracherkennung an dem Tonsignal durchzuführen, um einen tatsächlichen Sprachinhalt zu erhalten (Schritt S03b),
wobei die Steuereinheit (140) konfiguriert ist, um den tatsächlichen Sprachinhalt von der Spracherkennungseinheit (120) zu empfangen und mindestens einen Befehlssprachinhalt entsprechend dem tatsächlichen Sprachinhalt zu bestätigen (Schritt S05), wobei eine Beziehung zwischen dem tatsächlichen Sprachinhalt und dem mindestens einen Befehlssprachinhalt in einer Nachschlagetabelle aufgezeichnet wird, so dass die Steuereinheit (140) konfiguriert ist, um die Nachschlagetabelle nach mindestens einem oder einer Mehrzahl von Befehlssprachinhalten zu durchsuchen und den/die BefehlsSprachinhalt(e) entsprechend dem tatsächlichen Sprachinhalt bestätigt,
wobei, wenn der tatsächliche Sprachinhalt einem Befehlssprachinhalt entspricht, d.h. der tatsächliche Sprachinhalt dem Befehlssprachinhalt insgesamt entspricht oder dem Befehlssprachinhalt und den anderen Nicht-Befehlssprachinhalten, wie z.B. einem Umgebungsgeräuschinhalt, entspricht, die Steuereinheit (140) konfiguriert ist, um einen Betriebsbefehl zu erhalten, der dem Befehlssprachinhalt gemäß dem Befehlssprachinhalt entspricht, der dem tatsächlichen Sprachinhalt entspricht, und die Informationserfassungsvorrichtung (100) konfiguriert ist, um infolgedessen einen Vorgang als Reaktion auf den Betriebsbefehl und entsprechend diesem durchzuführen (Schritt S07),
wobei der Betriebsbefehl der "Aufzeichnungsstartbefehl" oder ein anderer Betriebsbefehl ist, wobei der Betriebsbefehl programmierbar ist,
wobei in einem Fall, in dem die Steuereinheit (140) das Merkmal des Tonsignals mit den Signalmerkmalen von mindestens einem oder einer Mehrzahl von Schussdaten der Tonmodelldatenbank vergleicht und dann bestätigt, dass das Tonsignal mit keinem Schussdatenwert übereinstimmt, die Steuereinheit (140) konfiguriert ist, um als Reaktion auf den Betriebsbefehl weiterhin die Videoaufzeichnungseinheit 130 zu steuern, um einen dem Betriebsbefehl entsprechenden Betrieb durchzuführen (Schritt S07), und wobei, wenn die Steuereinheit (140) den Aufzeichnungsstartbefehl, der dem tatsächlichen Sprachinhalt entspricht, und den Aufzeichnungsstartbefehl, der dem Schuss entspricht, empfängt, die Steuereinheit (140) konfiguriert ist, um als Ergebnis auf den zuerst empfangenen "Aufzeichnungsstartbefehl" zu reagieren und dann den später empfangenen "Aufzeichnungsstartbefehl" zu verwerfen.

## Revendications

1. Procédé de commande vocale pour un dispositif de capture d'informations, comprenant les étapes suivantes :
la réception, par un microphone (110), d'un son ambiant ;
la transformation, par un circuit de traitement de signaux du microphone (110), du son ambiant en un signal sonore (étape S01) ;
après avoir reçu le signal sonore du microphone (110), la comparaison, par une unité de reconnaissance vocale (120), du signal sonore avec au moins une donnée de coup de feu pour confirmer si le signal sonore correspond à une donnée de coup de feu (étape S03a) ;
dans lequel, si le signal sonore correspond à la donnée de coup de feu, c'est-à-dire que l'unité de reconnaissance vocale (120) compare la caractéristique du signal sonore avec des caractéristiques de signal d'au moins une ou une pluralité de données de coup de feu d'une base de données de modèles sonores et confirme ensuite que le signal sonore correspond à une donnée de coup de feu de la base de données de modèles sonores, l'unité de reconnaissance vocale (120) envoie à une unité de commande (140) un résultat de comparaison indiquant que le signal sonore correspond à une donnée de coup de feu de la base de données de modèles sonores, et
en conséquence, l'émission, par l'unité de commande (140), d'une « commande de démarrage d'enregistrement », ce qui amène le dispositif de capture d'informations (100) à effectuer un enregistrement vidéo en réponse à la « commande de démarrage d'enregistrement » (étape S09), l'unité de commande (140) commandant, en réponse à la « commande de démarrage d'enregistrement », à une unité d'enregistrement vidéo (130) d'effectuer un enregistrement vidéo de manière à capturer une donnée d'ambiance ;
l'exécution, par l'unité de reconnaissance vocale (120), d'une reconnaissance vocale sur le signal sonore afin d'obtenir un contenu vocal réel (étape S03b) ;
la réception, par l'unité de commande (140), du contenu vocal réel de l'unité de reconnaissance vocale (120) et la confirmation d'au moins un contenu vocal de commande en fonction du contenu vocal réel (étape S05) ; dans lequel une relation entre le contenu vocal réel et ledit au moins un contenu vocal de commande est enregistrée dans une table de recherche de sorte que l'unité de commande (140) recherche dans la table de recherche au moins un ou une pluralité de contenus vocaux de commande et confirme le(s) contenu(s) vocal(aux) de commande correspondant au contenu vocal réel ;
dans lequel, si le contenu vocal réel correspond à un contenu vocal de commande de la table de recherche, c'est-à-dire que le contenu vocal réel correspond au contenu vocal de commande dans son intégralité ou correspond au contenu vocal de commande et à des contenus vocaux non commandés tels qu'un contenu sonore ambiant, l'obtention, par l'unité de commande (140), d'une commande d'opération correspondant au contenu vocal de commande en fonction du contenu vocal de commande correspondant au contenu vocal réel, et en conséquence le dispositif de capture d'informations (100) exécute une opération en réponse et correspondant à la commande d'opération (étape S07) ;
dans lequel la commande d'opération est la « commande de démarrage d'enregistrement » ou une autre commande d'opération, dans lequel la commande d'opération est programmable ;
dans lequel, dans le cas où l'unité de commande (140) compare la caractéristique du signal sonore avec les caractéristiques de signal d'au moins une ou une pluralité de données de coup de feu de la base de données de modèles sonores et confirme ensuite que le signal sonore ne correspond à aucune donnée de coup de feu de la base de données sonores (étape S03a), l'unité de commande (140) commande toujours, en réponse à la commande d'opération, l'unité d'enregistrement vidéo (130) pour effectuer l'opération correspondant à la commande d'opération (étape S07) ; et
dans lequel, si l'unité de commande (140) reçoit la « commande de démarrage d'enregistrement » correspondant au contenu vocal réel et la « commande de démarrage d'enregistrement » correspondant au coup de feu, l'unité de commande (140) répond en conséquence à la première « commande de démarrage d'enregistrement » reçue et rejette ensuite la « commande de démarrage d'enregistrement » reçue ultérieurement.

2. Dispositif de capture d'informations, comprenant :
un microphone (110) pour recevoir un son ambiant, le microphone (110) ayant un circuit de traitement de signaux configuré pour transformer le son ambiant en un signal sonore (étape S01) ;
une unité de reconnaissance vocale (120) couplée au microphone (110) ;
une unité d'enregistrement vidéo (130) pour effectuer un enregistrement vidéo afin de capturer une donnée d'ambiance ; et
une unité de commande (140) couplée à l'unité de reconnaissance vocale (120) et à l'unité d'enregistrement vidéo (130) ;
dans lequel l'unité de reconnaissance vocale (120) est configurée pour : recevoir le signal sonore du microphone (110) et comparer ensuite le signal sonore avec au moins une donnée de coup de feu pour confirmer si le signal sonore correspond à une donnée de coup de feu,
dans lequel, si le signal sonore correspond à au moins une donnée de coup de feu, c'est-à-dire que l'unité de reconnaissance vocale (120) compare la caractéristique du signal sonore avec les caractéristiques de signal d'au moins une ou une pluralité de données de coup de feu d'une base de données de modèles sonores et confirme ensuite que le signal sonore correspond à une donnée de coup de feu de la base de données de modèles sonores, l'unité de reconnaissance vocale (120) est configurée pour envoyer à l'unité de commande (140) le résultat de comparaison selon lequel le signal sonore correspond à une donnée de coup de feu de la base de données de modèles sonores, et l'unité de commande (140) est configurée pour émettre, en conséquence, une « commande de démarrage d'enregistrement » configurée pour amener le dispositif de capture d'informations (100) à effectuer un enregistrement vidéo en réponse à la « commande de démarrage d'enregistrement » (étape S09), l'unité de commande (140) étant configurée pour commander, en réponse à la « commande de démarrage d'enregistrement », l'unité d'enregistrement vidéo (130) pour effectuer un enregistrement vidéo de manière à capturer la donnée d'ambiance,
dans lequel l'unité de reconnaissance vocale (120) est en outre configurée pour effectuer une reconnaissance vocale sur le signal sonore afin d'obtenir un contenu vocal réel (étape S03b) ;
dans lequel l'unité de commande (140) est configurée pour recevoir le contenu vocal réel de l'unité de reconnaissance vocale (120) et pour confirmer au moins un contenu vocal de commande en fonction du contenu vocal réel (étape S05), dans lequel une relation entre le contenu vocal réel et ledit au moins un contenu vocal de commande est enregistrée dans une table de recherche de sorte que l'unité de commande (140) est configurée pour rechercher dans la table de recherche au moins un ou une pluralité de contenus vocaux de commande et confirme le(s) contenu(s) vocal(aux) de commande correspondant au contenu vocal réel ;
dans lequel, si le contenu vocal réel correspond à un contenu vocal de commande, c'est-à-dire que le contenu vocal réel correspond au contenu vocal de commande dans son intégralité ou correspond au contenu vocal de commande et aux autres contenus vocaux non commandés tels qu'un contenu sonore ambiant, l'unité de commande (140) est configurée pour obtenir une commande d'opération correspondant au contenu vocal de commande en fonction du contenu vocal de commande correspondant au contenu vocal réel, et le dispositif de capture d'informations (100) est configuré pour effectuer, en conséquence, une opération en réponse à et correspondant à la commande d'opération (étape S07) ;
dans lequel la commande d'opération est la « commande de démarrage d'enregistrement » ou une autre commande d'opération, dans lequel la commande d'opération est programmable ;
dans lequel, dans un cas où l'unité de commande (140) compare la caractéristique du signal sonore avec les caractéristiques de signal d'au moins une ou une pluralité de données de coup de feu de la base de données de modèles sonores et confirme ensuite que le signal sonore ne correspond à aucune donnée de coup de feu, l'unité de commande (140) est configurée pour toujours commander, en réponse à la commande d'opération, l'unité d'enregistrement vidéo 130 pour effectuer une opération correspondant à la commande d'opération (étape S07) ; et dans lequel, si l'unité de commande (140) reçoit la commande de démarrage d'enregistrement correspondant au contenu vocal réel et la commande de démarrage d'enregistrement correspondant au coup de feu, l'unité de commande (140) est configurée pour répondre, en conséquence, à la première « commande de démarrage d'enregistrement » reçue et pour rejeter ensuite la « commande de démarrage d'enregistrement » reçue ultérieurement.
